# EUROPÄISCHE PATENTANMELDUNG

(11) **EP 0 643 543 A2**
(43) Veröffentlichungstag der Anmeldung: **15.03.1995**
(21) Anmeldenummer: 94113015.5
(22) Anmeldetag: 20.08.1994
(51) Int. Cl.: H04Q 7/24

(54) **Nahbereichfunktelefonsystem**

(30) Priorität: 10.09.1993 DE 4330704
(71) Anmelder: Alcatel SEL Aktiengesellschaft, D-70435 Stuttgart (DE)
(72) Erfinder: Böhm, Manfred, Dr., D-70499 Stuttgart (DE)
(74) Vertreter: Knecht, Ulrich Karl

(57) **Zusammenfassung**

System zum Aufbau einer flächendeckenden, kostengünstigen Infrastruktur für ein Nahbereichs-Funksystem durch Verwendung von öffentlichen Nahbereichs-Feststation (TP) und privaten Feststationen (1,2,3). Jeder Teilnehmer kann über jede private Feststation oder über jede öffentliche Nahbereichs-Feststation eine Verbindung herstellen.

## Beschreibung

Unter einem Telepoint-System werden kleine und preiswerte "schnurlose" Telefon-Systeme verstanden, die es im Nahbereich von Funkfeststationen, die öffentlich auf Plätzen, Straßen, Bahnhöfen usw. errichtet sind, ermöglichen, Telefongespräche über eine Funkverbindung von mehreren hundert Meter zu führen. Im Bereich einer privaten Heimstation funktionieren die verwendeten Telefone wie bereits bekannt über den eigenen Hauptanschluß.

Bereits aus dem Stand der Technik bekannt sind Telepoint-Systeme, deren Systemelemente aus:
1. den öffentlichen Telepointfeststationen bzw. birdie-Stationen,
2. einem Betriebs- und Abrechnungssystem und
3. den schnurlosen Endgeräten bestehen.

Der Begriff "birdie" bezieht sich hierbei auf den von der DBP Telekom verwendeten Markennamen "birdie", unter dem ein Telepoint-System angeboten wurde. Hierbei gibt es sogenannte private Mobilteile, die genutzt werden können, um abgehende Gespräche zu führen. Dies könnte auch als "öffentliches schnurloses Telefon" bezeichnet werden, wobei die Basisstationen dem Netzbetreiber / Diensteanbieter, die Mobilteile den Nutzern zuzuordnen sind.

Dabei macht ein wichtiges Systemmerkmal der schnurlosen Telefone, und zwar, daß "ein normales Mobilteil nur seine eigene Basistation versteht" deutlich, daß für einen Telepointdienst die Implementierung zusätzlicher Verfahren wichtig ist (aus: Mobilfunk, Das Handbuch der mobilen Sprach-, Text- und Daten-Kommunikation, Josef Kedaj und Günther Hentschel, Neue Mediengesellschaft Ulm mbH, Februar 1993, Kapitel 7: Anwendungen des schnurlosen Telefons).

Des weiteren ist aus dem Stand der Technik bekannt, daß für die Einführung des Telepoint-Diensts verschiedene Netzstrukturen verwendet werden können. Drei mögliche Strukturen sind: eine eigene Feststation, ein überlagertes Netz und eine Struktur auf der Basis eines intelligenten Neztes.

Eine spezielle Eigenschaft des Telepoint-Dienstes auf der Basis eines intelligenten Netzes ist die Möglichkeit, ankommende Rufe zu verarbeiten. Dazu erhalten an dem Dienst interessierte Telepoint-Teilnehmer spezielle Dienstnummern. Bei einer eigenen Feststation ist die Feststation direkt mit einem Fernsprechnetz verbunden. Bei diesem Telepoint-Dienst kann aber wegen der großen Teilnehmerdatenbank nur eine Negativ-Auswahl erfolgen, d.h. nur nicht zugangsberechtigte Teilnehmer können eingetragen werden, was aber wiederum negative Auswirkungen auf die Sicherheit des Telepoint-Dienstes hat.

Bei der Struktur des überlagerten Netzes sind die Feststationen über vorgeschaltete Steuerungen mit dem Fernsprechnetz verbunden, z.B. während der Überprüfung der Zugangsberechtigung des Anrufers leitet die Feststation die Information vom Anrufer zur vorgeschalteten Steuerung und umgekehrt (Elektrisches Nachrichtenwesen; R. Betts, M. Martin, B. Mattlet; "Telepoint auf der Basis von ISDN und intelligenten Netzen"; Band 64; Nummer 1, 1990; S. 85-94).

Der Erfindung liegt die Aufgabe zugrunde, ein Telepoint-System zu entwickeln, das eine flächendeckende Telepoint-Infrastruktur zur Verfügung stellt.

Die Aufgabe wird erfindungsgemäß gelöst durch die Lehre des Patentanspruchs 1.

Ein Vorteil der Erfindung ist, daß bei dem Aufbau und der Ausbreitung eines Telepoint-Systems ein niedriger Kostenaufwand für die Infrastruktur vom Netzanbieter zur Verfügung gestellt werden muß.

Dadurch, daß nur noch wenige öffentliche Telepointfeststationen vom Netzanbieter installiert werden müssen und die restliche Infrastruktur von einzelnen privaten Feststationen, die sich im Besitz privater Teilnehmer befinden, aus zur Verfügung gestellt wird, reduzieren sich die Kosten für den Netzanbieter erheblich, wodurch auch die Kosten für einen Teilnehmer sinken.

Vorteilhafte Weiterentwicklungen des Telepoint-Systems sind den Unteransprüchen 2 bis 7 zu entnehmen.

Gemäß der Erfindung senden die schnurlosen Endgeräte eine Teilnehmeridentifikation aus, die von den in dem Server befindlichen Mitteln überprüft wird. Die Teilnehmeridentifikation eines eingetragenen schnurlosen Handapparates versetzt lediglich zugangsberechtigte Teilnehmer in die Lage, über das Telepoint-System zu telefonieren.

Nach Unteranspruch 2 werden Gebühren, die bei dem Telefonieren über eine fremde private Feststation anfallen, dem Teilnehmerkonto der eigenen zugeordneten Feststation belastet. Vorzugsweise kann einem Teilnehmer, dessen private Feststation von einem fremden Teilnehmer benutzt wurde, ein festgelegter Betrag auf einem eigenen Gebührenkonto gutgeschrieben werden.

Nach Unteranspruch 3 wird die Höhe der Gebühr ebenfalls in Abhhängigkeit von der Entfernung der zugeordneten privaten Feststation zu der privaten Feststation, von der aus ein Verbindungsaufbau erfolgt ist, berechnet.

Nach Unteranspruch 4 sind in der privaten Feststation Mittel vorhanden, die dem zugeordneten Handapparat eine oberste Priorität in der Benutzung einräumen. Diese Mittel müssen deshalb vorhanden sein, damit ein Besitzer einer privaten Feststation bei seiner eigenen Feststation als der bevorzugte Teilnehmer immer in der Lage ist zu telefonieren. Hierbei wird lediglich eine kleine Zeitverzögerung akzeptiert, in der, wie in Unteranspruch 6 beschrieben, eine Übergabe der Verbindung von einer privaten Feststation zu einer anderen privaten Feststation erfolgt.

Nach Unteranspruch 6 können die privaten Feststationen des Telepoint-Systems digitale schnurlose Nebenstellenanlagen, sogenannte WPABX (wireless - private - automatic - branch - exchange) sein.

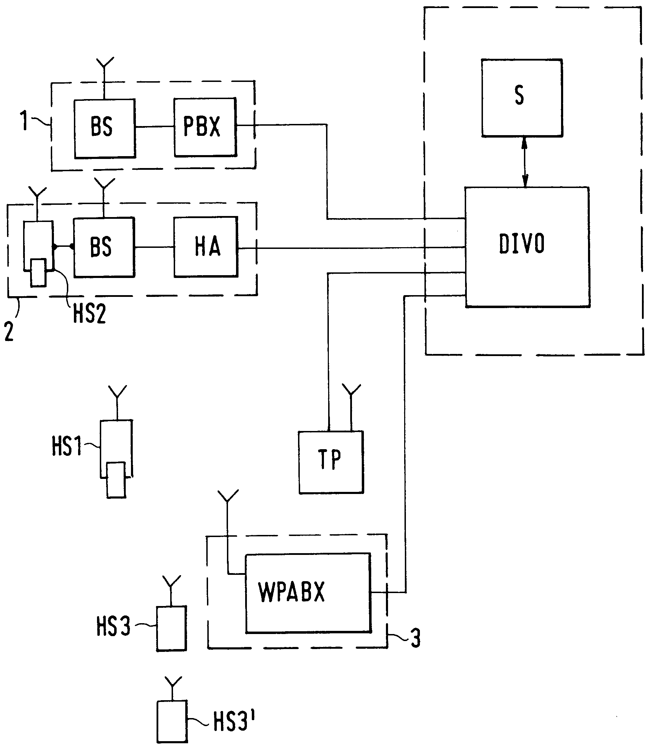

Im folgenden wird die Erfindung anhand der beigefügten Zeichnung erläutert, deren einzige Figur ein Blockschaltbild des erfindungsgemäßen Telepoint-Systems zeigt.

Ein Telepoint-System weist eine Vermittlungsstelle DIVO mit einem damit verbundenen Server S auf. Das Telepoint-System besitzt fest installierte öffentliche Telepointfeststationen TP. Die öffentlichen Telepointfeststationen TP sind an zentralen Orten installiert, wie z.B. an Bahnhöfen, Marktplätzen usw., um die Möglichkeit des Telefonierens an jedem zentralen Ort zu gewähren.

Das Telepoint-System enthält zusätzlich private Feststationen 1, 2, 3. Jeder der privaten Feststationen 1, 2, 3 ist mindestens ein schnurloser Handapparat zugeordnet HS1, HS2, HS3, HS3'.

Es existieren verschiedene Möglichkeiten, aus welchen Bestandteilen die einzelnen privaten Feststationen bestehen.

Ein Beispiel einer privaten Feststation ist mit der Feststation 1 aus der Figur gegeben. Sie besteht aus einer Nebenstellenanlage PBX und einer damit verbundenen Basisstation BS. Dieser privaten Feststation 1 ist der schnurlose Handapparat HS1 zugeordnet.

Eine weitere private Feststation 2 besteht aus einem herkömmlichen drahtgebundenen Telefon HA mit einer daran angschlossenen Basisstation BS. Diese Kombination eines herkömmlichen Telefons mit der Basisstation BS dient dazu, daß sowohl das fest installierte herkömmliche Telefon als auch der schnurlose Handapparat über ein und dieselbe drahtgebundene Leitung zum Telefonieren verwendet werden können. Der Feststation 2 ist der Handapparat HS2 zugeordnet.

Ebenfalls eine Ausgestaltung einer privaten Feststation 3 besteht aus einer schnurlosen Nebenstellenanlage WPABX, die auf der Basis von z.B. DECT (Digital European Cordless Telephone) arbeitet.Dieser schnurlosen Nebenstellenanlage sind mehrere Handapparate zugeordnet, beispielsweise zwei, HS3 und HS3'.

Mittels des vorher beschriebenen Telepoint-Systems soll es möglich sein, mit einem der Handapparate HS1, HS2, HS3, HS3' über jede der beschriebenen privaten Feststationen 1, 2, 3 oder jede der öffentlichen Telepointfeststationen TP aus zu telefonieren.

Die privaten Feststationen 1, 2, 3 bleiben im Besitz eines privaten Teilnehmers, der auch die oberste Priorität bei der Benutzung seiner eigenen privaten Feststation besitzt. Für den Fall, daß eine private Feststation nicht benutzt wird, soll aber ein "fremder" Teilnehmer des Telepoint-Systems in die Lage versetzt werden, die private Feststation zu benutzen.

In der Figur ist dargestellt, daß ein Teilnehmer mittels des Handapparates HS1, welcher einer privaten Feststation 1 zugeordnet ist, über die Feststation 2 oder 3 oder über die Telepointfeststation TP zu telefonieren versucht.

Dabei wird in einem ersten Schritt nach einem freien Kanal gesucht. Dazu werden alle verfügbaren Kanäle abgetastet, und falls freie Kanäle vorhanden sind, wird ein Rufzeichen ausgesendet. Die mit den freien Kanälen verbundenen Sender antworten auf das Rufsignal mit einem weiteren Signal. Der Kanal, dessen Sender das stärkste Signal als Antwort auf das Rufsignal gesendet hat, wird zum Verbindungsaufbau und zum Telefonieren belegt.

Um das Telepoint-System vor dem Zugriff eines nicht zugangsberechtigten Teilnehmers zu schützen, muß, bevor z.B. das Telefonat geführt wird, eine Identifikation des Teilnehmers erfolgen. Dazu kann eine Teilnehmeridentifikation nach einem der bekannten Verfahren in Form eines Signals ausgesendet werden.

Mittels des Servers S, der mit der Vermittlungsstelle DIVO verbunden ist, wird überprüft, ob die Teilnehmeridentifikation eines zugangsberechtigten Teilnehmers gesendet wurde. Weiter wird mittels des Servers überprüft, ob die Teilnehmeridentifikation des zu der Feststation zugeordneten Teilnehmers, der den entsprechenden Handapparat benutzt, gesendet wurde. Ist der Teilnehmer zwar ein zugangsberechtigter Teilnehmer, aber entspricht er nicht dem zugeordneten Teilnehmer, dann wird er als sogenannter Fremdteilnehmer authorisiert, dennoch einen Verbindungsaufbau herzustellen.

Eine gebührenmäßige Belastung des Fremdteilnehmers darf nicht auf dem Gebührenkonto des zugeordneten Teilnehmers erfolgen. Die gebührenmäßige Belastung wird stattdessen auf einem eigenen Gebührenkonto erfolgen.

Desweiteren ist es beispielsweise möglich, dem Teilnehmer und gleichzeitigem Besitzer einer privaten Feststation für jede Fremdbenutzung durch einen Fremdteilnehmer einen festzulegenden Betrag auf seinem Gebührenkonto gutzuschreiben. Dies soll als Anreiz dienen, damit sich ein Teilnehmer und Besitzer freiwillig bereit erklärt, seine Feststation für Fremdbenbenutzung zur Verfügung zu stellen.

Eine weitere spezielle Form der Gebührenbelastung kann derart erfolgen, daß für die Festlegung der Gebühren ebenfalls noch die Entfernung zwischen der eigenen privaten Feststation und der "fremdbenutzten" Feststation eine Rolle spielt. Die dadurch anfallenden erhöhten Gebühren können deshalb beispielsweise teilweise demjenigen gutgeschrieben werden, der die Fremdbenutzung zuläßt.

Um zu vermeiden, daß ein Teilnehmer und Besitzer einer privaten Feststation seine eigene Feststation deshalb nicht benutzen kann, weil fremde Teilnehmer die Kanäle belegen, muß dieser Teilnehmer mit einer obersten Priorität belegt werden. Das bedeutet, daß dieser Teilnehmer immer als erster einen freien Kanal erhält, und daß er einen fremden Teilnehmer an einen weiteren freien Kanal übergeben kann, ihn somit also "verdrängen" kann. Sollte kein weiterer Kanal frei sein, wird die Verbindung nach einer festgelegten Zeitspanne unterbrochen. Die Unterbrechung wird dem fremden Teilnehmer angezeigt. Ist ein anderer freier Kanal vorhanden, dann wird diese Verbindung durch den Server hergestellt.

An den Telepointfeststationen ist keiner der Teilnehmer mit einer Priorität belegt und alle Teilnehmer werden gleichberechtigt behandelt.

Bei der Verwendung von z.B. schnurlosen Nebenstellenanlagen WPABX, die nach DECT arbeiten, befinden sich mehrere berechtigte Teilnehmer, die eine oberste Priorität haben, in dem System. Dies ist in der Figur durch die Feststation 3 mit den zwei Handapparaten HS3 und HS3' angedeutet. Dennoch sind ebenfalls die beiden Handapparate bei fremden privaten Feststationen, hier 1 und 2, zugangsberechtigt und die Gebührenerfassung und -belastung erfolgt auf einem Gebührenkonto der Feststation 3.

## Patentansprüche

1. Telepoint-System,
das folgende miteinander über ein Fernsprechnetz verbundene Elemente enthält: eine digitale Vermittlungsstelle (DIVO) mit einem Server (S), der erste Mittel zur Prüfung von Teilnehmeridentifikationen enthält, öffentliche Telepointfeststationen (TP) und private Feststationen (1,2,3), denen schnurlose Handapparate (HS1, HS2, HS3, HS3') fest zugeordnet sind, und bei dem von jedem schnurlosen Handapparat (HS1) über jede öffentliche Telepointfeststation (TP) und über jede dem jeweiigen Handapparat nicht fest zugeordnete, private Feststation (2, 3) eine Verbindung zu einem Teilnehmer im Fernsprechnetz aufgebaut werden kann, indem der schnurlose Handapparat (H1) jeweils eine Teilnehmeridentifikation aussendet und der Server (S) überprüft, ob diese die Teilnehmeridentifikation eines zum Telepoint-System zugangsberechtigten Teilnehmers ist.

2. Telepoint-System nach Anspruch 1,
bei dem der Server (S) zweite Mittel enthält, die die Verbindung von einem der schnurlosen Handapparate (HS1) über eine solche private Feststation (2), der dieser schnurlose Handapparat (HS1) nicht fest zugeorndet ist, vergebühren, indem sie das Teilnehmerkonto der diesem Handappart (HS1) zugeordneten privaten Feststation (1) gebührenmäßig belasten.

3. Telepoint-System nach Anspruch 2,
bei dem die gebührenmäßige Belastung zusätzlich abhängig ist von der Entfernung zwischen der zugeordneten privaten Feststation und der privaten Feststation, von der aus der Verbindungsaufbau erfolgt.

4. Telepoint-System nach Anspruch 1,
bei dem jede private Feststation (1,2,3) Mittel enthält, die dem ihr jeweils fest zugeordneten schnurlosen Handappart (HS1, HS2, HS3, HS3') eine oberste Priorität zur Benutzung einräumen.

5. Telepoint-System nach Anspruch 1,
bei dem der Server (S) Mittel enthält, die eine bereits aufgebaute Verbindung an eine andere private Feststation weiterreichen.

6. Telepoint-System nach Anspruch 1,
mit privaten Feststationen (3), die digitale schnurlose Nebenstellenanlagen (WPABX) sind, und denen jeweils mindestens zwei der schnurlosen Handapparate (HS3, HS3') fest zugeordnet sind.
